# EUROPEAN PATENT APPLICATION

(11) **EP 2 259 555 A1**
(43) Date of publication of application: **08.12.2010**
(21) Application number: 09724039.4
(22) Date of filing: 24.03.2009
(51) Int. Cl.: H04M 1/02, G06F 3/02, H04M 1/23

(54) **COMMUNICATION DEVICE, METHOD FOR DISPLAYING FUNCTION OF COMMUNICATION DEVICE, AND RECORDING MEDIUM OF PROGRAM FOR COMMUNICATION DEVICE**

(30) Priority: 27.03.2008 JP 2008084325
(71) Applicant: NEC Corporation, Minato-ku Tokyo 108-8001 (JP)
(72) Inventor: XIAO, Hai, Tokyo 108-8001 (JP)
(74) Representative: Vossius & Partner
(86) International application number: PCT/JP2009/056417
(87) International publication number: WO 2009/119866

(57) **Abstract**

In order to realize a communication device with improved operability by a simple structure and reduced cost, the communication device (1) of the present invention includes a first housing (2), a second housing (3) overlapped with the first housing (2) as to expose at least one of predetermined areas with an operation unit (11) on the surface, a slide operation detection means (6) which detects which of the predetermined areas are exposed, a function setting means (7) which receives the detection result and sets the functions of the operation unit (11) according to the exposed areas, and a function display means (8) which displays the set function on the operation unit (11).

## Description

### TECHNICAL FIELD

The present invention relates to a communication device, method for displaying function of communication device, and recording medium of program for communication device, and in particular to a communication device, method for displaying function of communication device, and recording medium of program for communication device that performs an appropriate display of function according to an operation state.

### BACKGROUND ART

With the spread of mobile communication devices such as cellular phones, the design of a product is becoming an important factor for a user when selecting a product. For the structure of a mobile communication device comprised of two or more housings, there are mainly two kinds, a sliding type and a folding type.

In a mobile communication device of a sliding type, a product type of the housing that slides in a longitudinal direction (hereinafter referred to as vertical slide type) occupies a large percentage. However, since the product of a vertical slide type generally has a limited number of keyboard buttons, a plurality of functions are often assigned to one button. As a result, in order to perform one function, it is necessary to press one button several times, and there is a problem such that an operation becomes complicated for a user.

Meanwhile, in recent years, the sophisticated functions and the speeding up of mobile communication devices have been progressing. In keeping with the above mentioned, for mobile communication devices, there are demands for a function not only for verbal communication but also for editing text using the mobile communication device while a user is away from home or office, or for access to the Internet. Therefore, for mobile communication devices, in addition to being as compact and slim in size, it is desired to be equipped with a full keyboard (so-called QWERTY keyboard).

However, the mobile communication device of a vertical slide type has a problem of complicated operation. In addition, when the operation is complicated, the efficiency of a user's operation and character input may fall. As a result, the user gradually stops using the function of character input, and furthermore, the user's motivation to use services such as e-mails and the Internet access which requires a character input may decrease.

In order to solve such problems, a mobile communication device that the housing can slide in perpendicular direction to longitudinal direction (horizontal direction) (hereinafter referred to as horizontal slide type) is being contrived. A mobile communication device of a horizontal slide type has an advantage of being able to assign a wider area for keyboard buttons than a mobile communication device of a vertical slide type. For example, in patent document 1, an electronic appliance having a structure in which keyboard appears with its housing slid in an approximate horizontal direction, is disclosed.

Further, in patent document 2, an electronic device having a function to switch key function display of each key per input mode, is disclosed. The electronic device disclosed in patent document 2, by making it easy to confirm the existing input mode and key function of each key, improves the operability.

Furthermore, non patent document 1 discloses a structure in which operation unit of two kinds corresponding to both of vertical slide type and horizontal slide type are mounted in a housing of a mobile communication device.
[patent document 1] Japanese Patent Laid-Open No. 2007-158970
[patent document 2] Japanese Patent Laid-Open No. 2002-007034
[non patent document 1] IT media news. (2007, March 27). "Helio announces vertical and horizontal sliding cellular phone." Retrieved February 13, 2009, The Internet, <URL:http://www.itmedia.co.jp/news/articles/0703/27/news017.html#1_yu_ocean>.

### DISCLOSURE OF THE INVENTION

### TECHNICAL PROBLEM

However, the electronic appliance disclosed in patent document 1 or the operation unit of the electronic device disclosed in patent document 2 often has a different layout of the function and the display content than a general operation unit of a cellular phone of a vertical slide type.

Further, when using such electronic appliance or device, unlike the usual cellular phones, a user needs to operate the device by holding a housing being long in a horizontal direction.

For this reason, a device disclosed in patent document 1 or patent document 2 has a disadvantage that its users who are accustomed to the operation of a cellular phone of a vertical slide type may be forced to perform an unused operation. This is because the function or the display of the operation unit differs from a cellular phone of a vertical slide type, and moreover, it is because the direction of the device is fixed to the horizontal direction.

Meanwhile, the mobile communication device disclosed in non patent document 1 has a disadvantage that its structure is complicated because of the necessity to mount two kinds of operation units to the housing. Further, as a result of the complicated structure, there is also a disadvantage of having a high cost of the mobile communication device.

It is an object of the present invention to provide a communication device, method for displaying function of communication device, and recording medium of program for communication device to solve the above-mentioned problems.

### TECHNICAL SOLUTION

The communication device of the present invention is provided with a first housing, a second housing overlapped with the first housing as to expose at least one of predetermined areas on the surface with an operation unit, a slide operation detection means which detects which of the predetermined areas are exposed, a function setting means which receives the detection result and sets the functions of the operation unit according to the exposed areas, and a function display means which displays the set function on the operation unit.

Further, the method for displaying function of communication device of the present invention is a method for displaying function of communication device including a first housing and a second housing overlapped with the first housing as to expose at least one of predetermined areas on the surface with an operation unit, characterized by detecting which of the predetermined areas are exposed, receiving the detection result, setting the functions of the operation unit according to the exposed areas, and displaying the set function on the operation unit.

Furthermore, the recording medium of program for communication device of the present invention is a machine-readable recording medium recording the displaying function program for communication device including a first housing and a second housing overlapped with the first housing as to expose at least one of predetermined areas on the surface with an operation unit, and the displaying function program for communication device having the computer perform the process of detecting which of the predetermined areas are exposed, the process of receiving the detection result and setting the functions of the operation unit according to the exposed areas, and the process of displaying the set function on the operation unit.

### ADVANTAGEOUS EFFECT OF THE INVENTION

The present invention can realize a communication device having improved operability with a simple structure and with a low cost.

### BRIEF DESCRIPTION OF THE DRAWINGS

FIG. 1 is an appearance diagram of the mobile communication device 1 according to the first exemplary embodiment of the present invention;
FIG. 2 is a functional block diagram of the mobile communication device 1 according to the first exemplary embodiment of the present invention;
FIG. 3 shows a configuration example of a keyboard of housing 3 according to the first exemplary embodiment of the present invention;
FIG. 4 shows an example of sliding housing 2 of the mobile communication device 1 in vertical direction according to the first exemplary embodiment of the present invention;
FIG. 5 shows an example of sliding housing 2 of the mobile communication device 1 in horizontal direction according to the first exemplary embodiment of the present invention;
FIG. 6 is a flowchart showing keyboard setting process with slide operation according to the first exemplary embodiment of the present invention;
FIG. 7 is a block configuration diagram of the communication device 50 according to the second exemplary embodiment of the present invention;
FIG. 8 is a flowchart showing function setting process with slide operation according to the second exemplary embodiment of the present invention;
FIG. 9 is an appearance diagram of the mobile communication device 100 according to the third exemplary embodiment of the present invention;
FIG. 10 is a functional block diagram of the mobile communication device 100 according to the third exemplary embodiment of the present invention;
FIG. 11 shows a configuration example of a keyboard of the housing 300 according to the third exemplary embodiment of the present invention;
FIG. 12 shows an example of sliding the housing 200 of mobile communication device 100 in vertical direction according to the third exemplary embodiment of the present invention;
FIG. 13 shows an example of sliding housing 200 of the mobile communication device 100 in horizontal direction according to the third exemplary embodiment of the present invention;
FIG. 14 is a flowchart showing function setting process with slide operation according to the third exemplary embodiment of the present invention;
FIG. 15 is a diagram showing slide feature provided by the housing 200 and the housing 300 according to the third exemplary embodiment of the present invention;
FIG. 16 is a diagram of a state of the convex part 301 and the convex part 302 of the housing 3 set to the groove part 201 and the groove part 202 of the housing 200, viewing from the side of the housing 200, according to the third exemplary embodiment of the present invention;
FIG. 17 is a diagram showing positional relation of the magnet 211 and the switches 311 and 312 when the housing 200 and the housing 300 are completely overlapped, according to the third exemplary embodiment of the present invention;
FIG. 18 is a diagram showing positional relation of the magnet 211 and the switches 311 and 312 when the housing 200 is slid in a vertical direction, according to the third exemplary embodiment of the present invention;
FIG 19 is a diagram showing positional relation of the magnet 211 and the switches 311 and 312 when the housing 200 is slid in a horizontal direction, according to the third exemplary embodiment of the present invention; and
FIG. 20 is a diagram showing a cross-section of the operation unit 111 of the housing 300 and the keyboard function display unit 108, according to the third exemplary embodiment of the present invention.

### BEST MODE FOR CARRYING OUT THE INVENTION

The following will describe a mobile communication device as one exemplary embodiment of a communication device of the present invention in detail. Further, the following first to third exemplary embodiments are preferred exemplary embodiments of the present invention. Accordingly, although technically desirable various limitations are attached to the exemplary embodiments, the scope of the present invention is not limited to the exemplary embodiments.

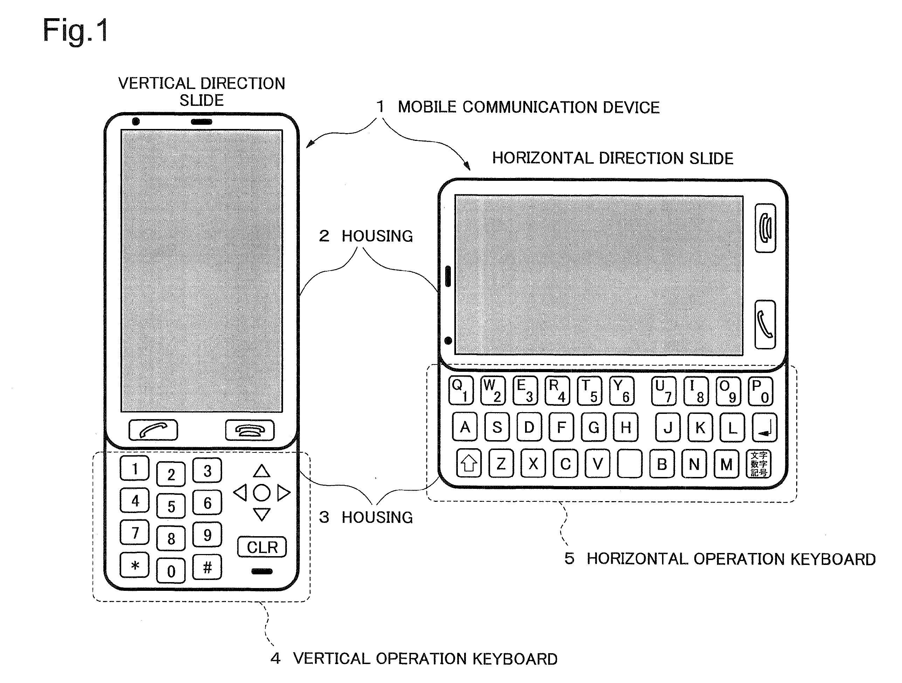

FIG. 1 is an appearance diagram of mobile communication device 1 according to the first exemplary embodiment of the present invention. As shown in FIG. 1, mobile communication device 1 includes housing 2 and housing 3. The housing 2 is displaced (hereinafter referred to as slide) in the longitudinal direction (hereinafter referred to as vertical direction) and in the second direction (hereinafter referred to as horizontal direction) crossing at right angles with a vertical direction of the housing 2 towards the housing 3.

Whether the housing 2 slides in the vertical direction or in the horizontal direction, it is detected as a detection signal by after-mentioned slide operation detection unit 6. Then, by the detection signal, the mobile communication device 1 sets function of an operation unit provided in the housing 3. In the first exemplary embodiment, the operation unit is a vertical operation keyboard 4 or a horizontal operation keyboard 5. At this moment, when there is a newly set function, the function will also be displayed on the keyboard.

As seen from the above, by detecting the slide operation of the vertical direction and the horizontal direction of the housing, it will be possible to set a layout and display of the keyboard. As a result, for a user, the keyboard can be operated by the same operation as the user's custom even in either slide direction.

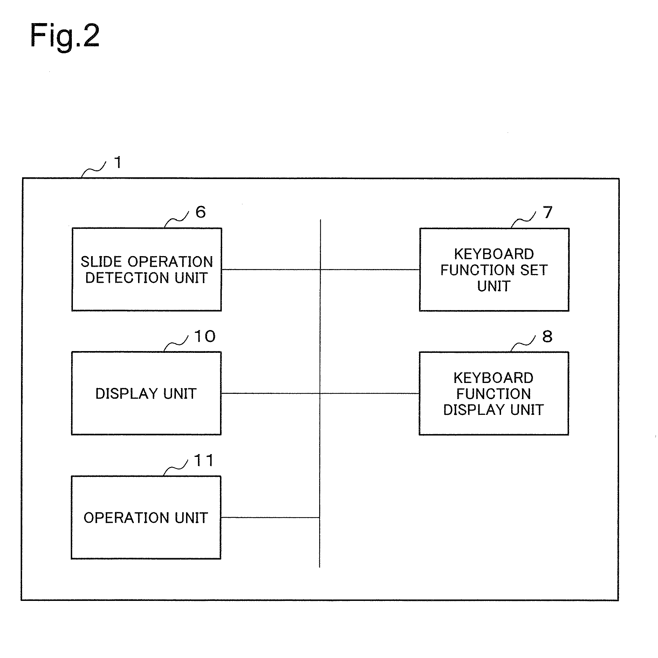

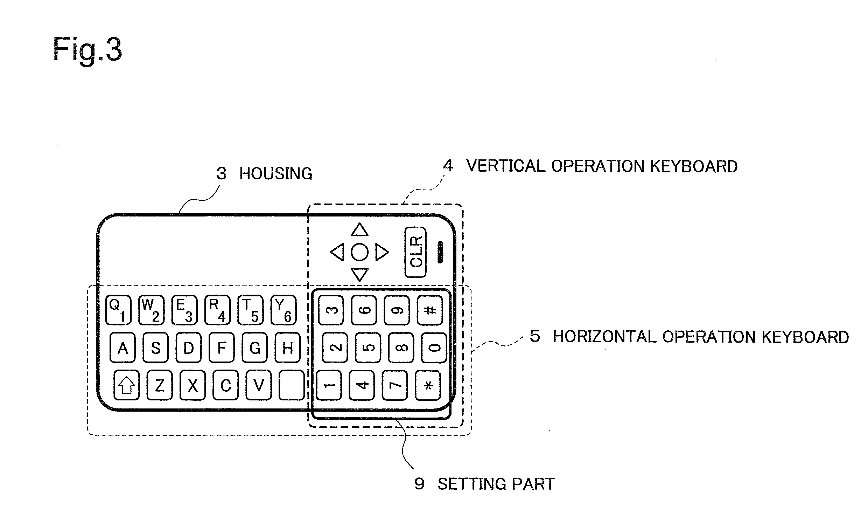

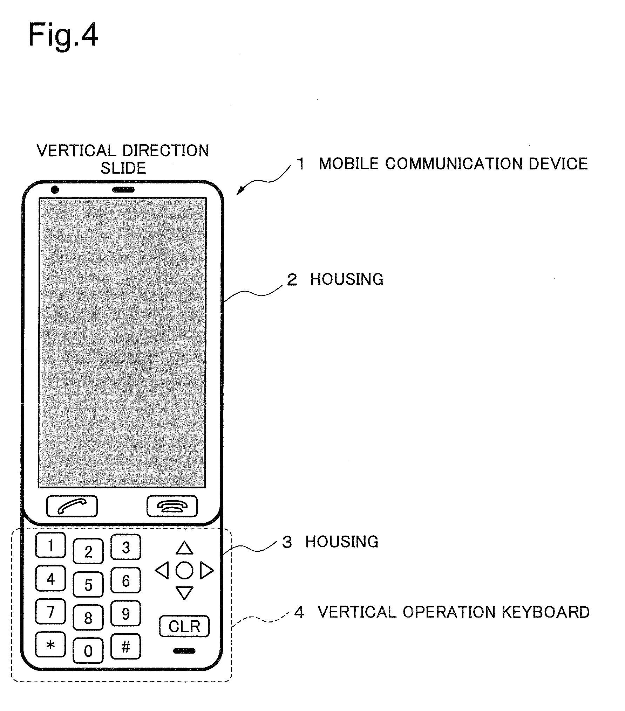

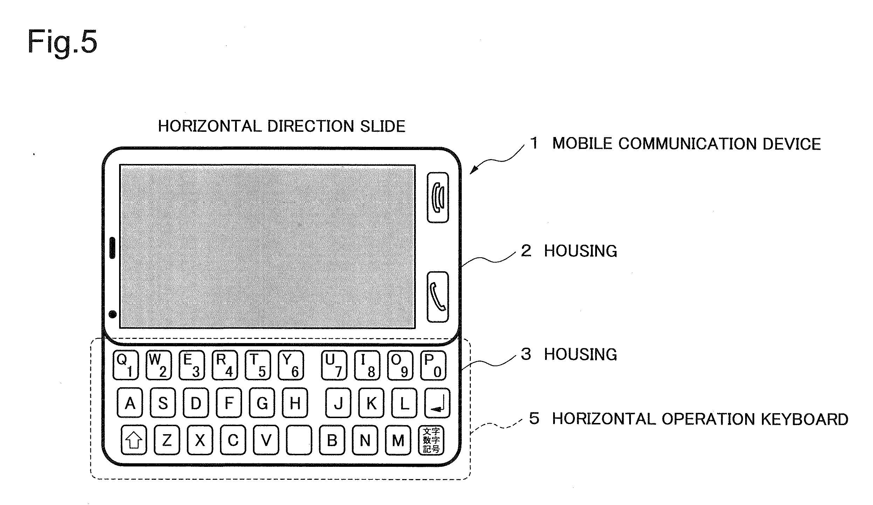

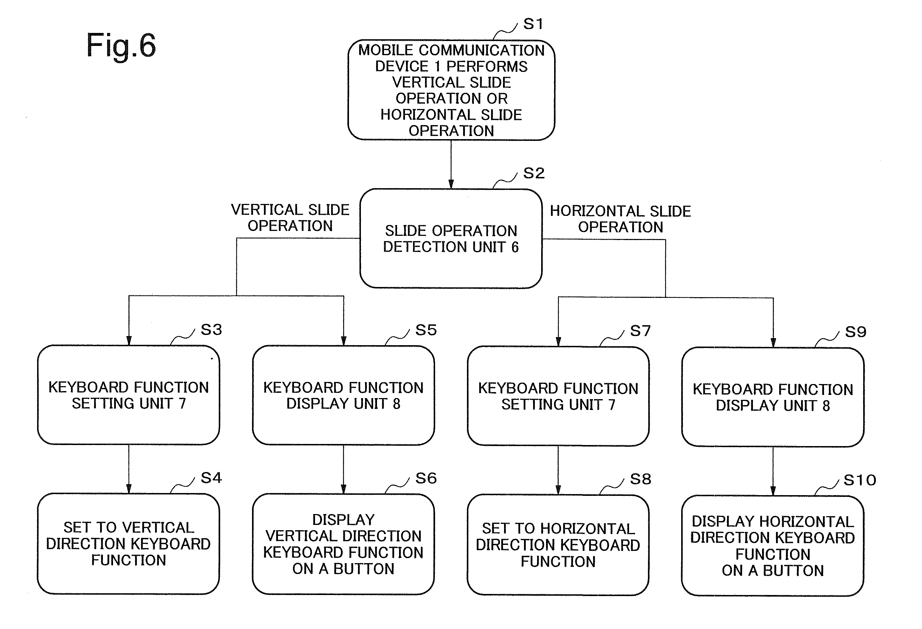

FIG. 2 is a block diagram of mobile communication device 1. FIG. 3 shows a configuration example of a keyboard of the housing 3. FIG. 4 shows an example of the sliding housing 2 in a vertical direction. FIG. 5 shows an example of the sliding housing 2 in a horizontal direction. FIG. 6 is a flowchart showing keyboard setting process with slide operation.

The mobile communication device 1 includes two-layer structure having the housing 2 and the housing 3 (refer to FIG. 1). One of the 2 layers is the housing 2 having a display (display unit 10), and the other is the housing 3 having a keyboard (operation unit 11). The display unit 10 displays data (e-mails, telephone numbers, image data, or the like) when the mobile communication device 1 is operated. Operation unit 11 is a device for inputting data when the mobile communication device 1 is operated. As shown in FIG. 1, an upper housing 2 can be slid in the vertical direction and the horizontal direction to the lower housing 3. The mobile communication device 1 has slide system in order to perform vertical slide operation and horizontal slide operation.

FIG. 2 is a functional block diagram of the mobile communication device 1. The mobile communication device 1 includes display unit 10, operation unit 11, slide operation detection unit 6, keyboard function setting unit 7, and keyboard function display unit 8.

The slide operation detection unit 6 detects the slide direction of the housing 2 towards the housing 3.

The housing 3, as shown in FIG. 3, includes operation part (vertical operation keyboard 4, refer to FIG. 4) which appears when the housing 2 slides in a vertical direction towards the housing 3, and includes operation part (horizontal operation keyboard 5, refer to FIG. 5) which appears when the housing 2 slides in a horizontal direction towards the housing 3. A part of the vertical operation keyboard 4 overlaps the horizontal operation keyboard 5. In the overlapped area (hereinafter referred to as set part) the function display of the keyboard is switched according to the operation state. The range of setting part 9 is shown in FIG. 3.

Next, the keyboard function setting unit 7 and keyboard function display unit 8 will be described.

The keyboard function setting unit 7 sets the position of each key, the display content, and function of the keyboard displayed to keyboard function display unit 8, according to the detection result (the vertical direction slide or the horizontal direction slide) of the slide operation detection unit 6.

The keyboard function display unit 8 displays a keyboard (operation unit) according to the content set by the keyboard function set unit 7.

As seen from the above, when the mobile communication device 1 is in the vertical direction slide state, the keyboard function unit 7 displays a keyboard to the keyboard function display unit 8 as shown in FIG. 4. Further, when the mobile communication device 1 is in the horizontal direction slide state, the keyboard function unit 7 displays a keyboard to keyboard function display unit 8 as shown in FIG. 5.

Next, the process of a keyboard setting with slide operation in the first exemplary embodiment of the present invention will be described using FIG. 6. FIG. 6 is a flowchart showing setting process of a keyboard function arising from the slide operation in the first exemplary embodiment.

First, in the mobile communication device 1, by a user, the vertical direction slide operation or the horizontal direction slide operation is performed (step S1). The slide operation detection unit 6 detects the slide operation of the housing 2, and judges whether the direction of said slide operation is the vertical direction or the horizontal direction (step S2).

The slide operation detection unit 6 sends information on judged slide operation direction to the keyboard function setting unit 7 and the keyboard function display unit 8. The keyboard function setting unit 7 sets keyboard function according to the direction of the slide operation. The keyboard function display unit 8 displays keyboard function to a button (steps S3~S10).

By the above-mentioned operation, the first exemplary embodiment causes the following effect.

The mobile communication device 1 has a structure capable of both the vertical direction slide and the horizontal direction slide. Further, a keyboard display can be switched so that it is suited to the slide direction detected by the slide operation detection unit 6. For this reason, when a user performs slide operation either in the vertical direction or in the horizontal direction, a user can operate the keyboard by an accustomed procedure. As a result, it becomes possible to realize communication device, which has easy operability, with a simple structure and with a low cost, and the user's convenience improves. For example, when the mobile communication device is used in a vertical direction, the key layout of vertical operation keyboard 4 will be the same as usual cellular phones. The display is very convenient such as when calling. Furthermore, when the mobile communication device is used in a horizontal direction, horizontal operation keyboard 5 can be made to have a layout of QWERTY keyboard which is used widely in information equipment. The display form, for example using a mobile communication device, makes the user to easily draft documents or access to the Internet.

In addition, mobile communication device of the first exemplary embodiment sets/displays function of a button of a keyboard according to the slide direction. For this reason, one keyboard unit can be used in both situations when slid in the vertical direction and in the horizontal direction according to the user's state of use. By this configuration, the surface of mobile communication device can be used effectively, moreover, the cost of the device can be saved. Furthermore, the function display of a button of the keyboard is realized by displaying the set function on the button of the keyboard.

Further, the first exemplary embodiment can be applied widely as long as it is a device having a keyboard function such as wireless communication device, mobile phones, slide type cellular phones, folded type cellular phones and the like. Furthermore, in the form to which the first exemplary embodiment is applied, the function of setting/displaying the button function according to the operation status can be realized. Even when the number of buttons capable of setting the function is small, it is possible for a user, by the above-mentioned function, to have operation of more function of the device from a key. Moreover, by displaying a function to the button, the operability of the device is also improved.

In addition, it is possible to have CPU (Central Processing Unit) execute the process shown in the flowchart of FIG. 6. Therefore, recording medium recording a program for having the process shown in the flowchart of FIG. 6 performed in CPU is also included in the present invention. As a recording medium, a semiconductor memory unit or an optical and/or a magnetic memory unit can be used. Further, having a system with a different configuration than the above-mentioned first exemplary embodiment to read the above-mentioned program and recording medium, and to have CPU of the system execute the above-mentioned program is possible. By also controlling communication device using such configuration, the same effect of the present exemplary embodiment is obtained.

Next, a second exemplary embodiment applied to the present invention will be explained.

The communication device 50 of the second exemplary embodiment, as same as mobile communication device of the first exemplary embodiment, is configured by two-layer structure having the first housing and the second housing. Further, with an operation unit on the surface, the first housing and the second housing is overlapped as to expose at least one of predetermined areas.

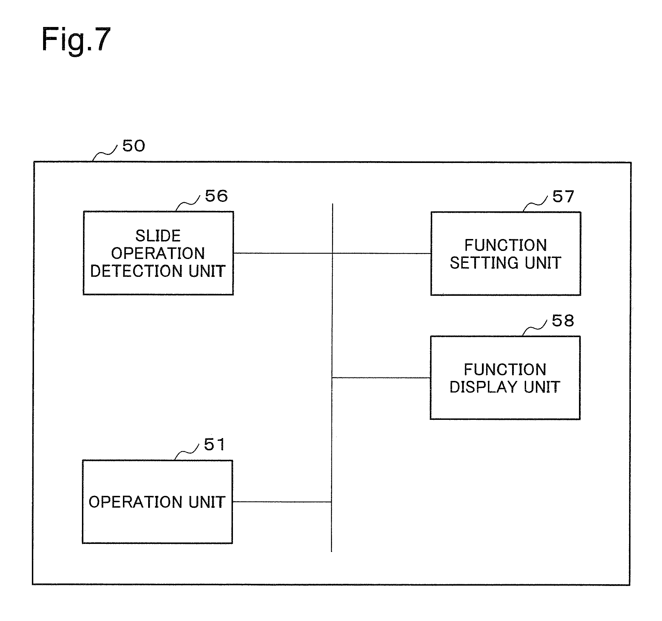

FIG. 7 is a block diagram of the interior function of the communication device 50. Communication device 50 has an operation unit 51, a slide operation detection unit 56, a function setting unit 57, and a function display unit 58.

The slide operation detection unit 56 detects which area is exposed.

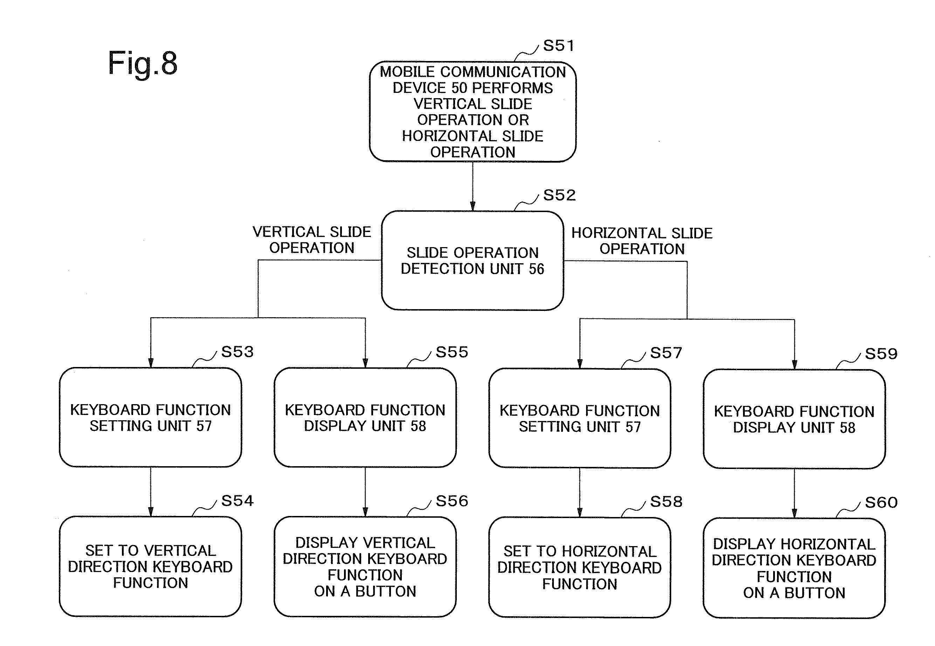

FIG. 8 is a flowchart showing a setting process of a function related to the communication device 50 of the second exemplary embodiment.

First, in the communication device 50, by a user, operation to expose the predetermined area is performed (step S51). The slide operation detection unit 56 detects operation to expose the area, and judges which area is exposed by said operation (step S52).

The slide operation detection unit 56 sends information on the exposed area to the function setting unit 57 and the function display unit 58. The function setting unit 58 displays function according to the exposed area to the communication device 50 as operation unit 51 (steps S53~S60). The user operates the communication device 50 by using the operation unit 51.

By the above-mentioned operation, the communication device 50 in the second exemplary embodiment also takes the same effect of the mobile communication device 1 described in the first exemplary embodiment. More specifically, the function of the communication device 50 is set as suitable to the area which the slide operation detection unit 6 detects, and the user can operate the communication device 50 by an accustomed procedure. As a result, it becomes possible to realize the communication device 50, which has easy operability, with a simple structure and with a low cost, and the user's convenience improves.

Next, a third exemplary embodiment of the present invention will be explained.

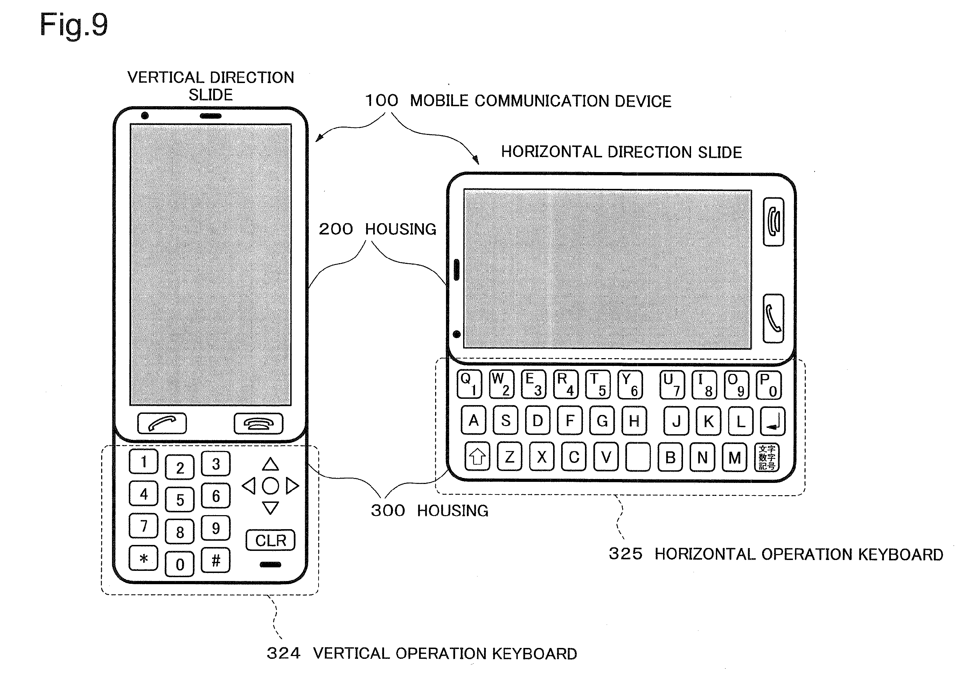

FIG. 9 is an appearance diagram of the mobile communication device 100 according to the third exemplary embodiment of the present invention. As shown in FIG. 9, the mobile communication device 100 includes a housing 200 and a housing 300. The housing 200 slides in the vertical direction and the horizontal direction of the housing 200 towards the housing 300.

Whether housing 200 slides in the vertical direction or in the horizontal direction will be detected as a detection signal by the after-mentioned slide operation detection unit 106. Then, by the detection signal, the mobile communication device 100 sets function of the operation unit provided in housing 300. In the third exemplary embodiment, the operation unit is a vertical operation keyboard 324 or a horizontal operation keyboard 325. At this moment, when there is a newly set function, the function will also be displayed on the keyboard.

As seen from the above, by detecting the slide operation of the vertical direction and the horizontal direction of the housing, it will be possible to set a layout and display of the keyboard. As a result, for a user, the keyboard can be operated by the same operation as the user's custom even in either slide direction.

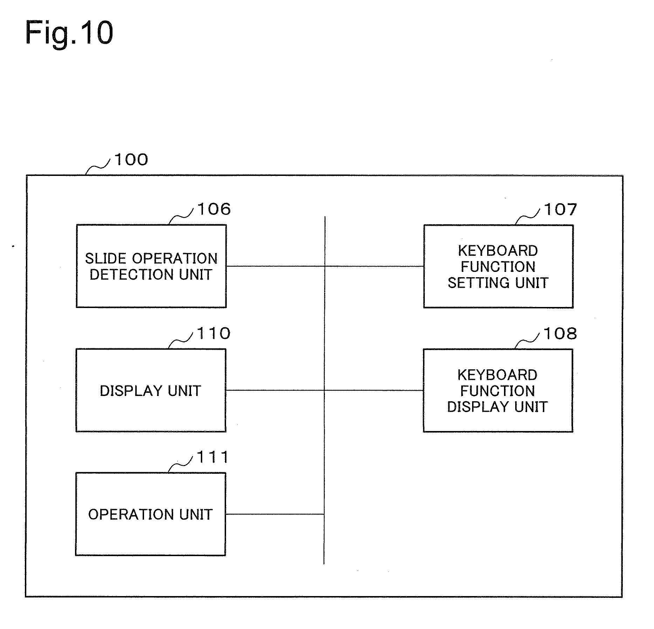

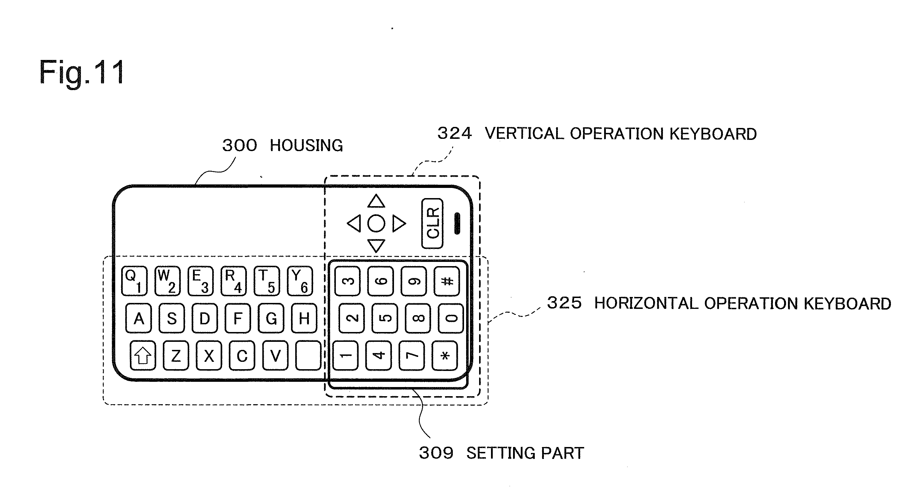

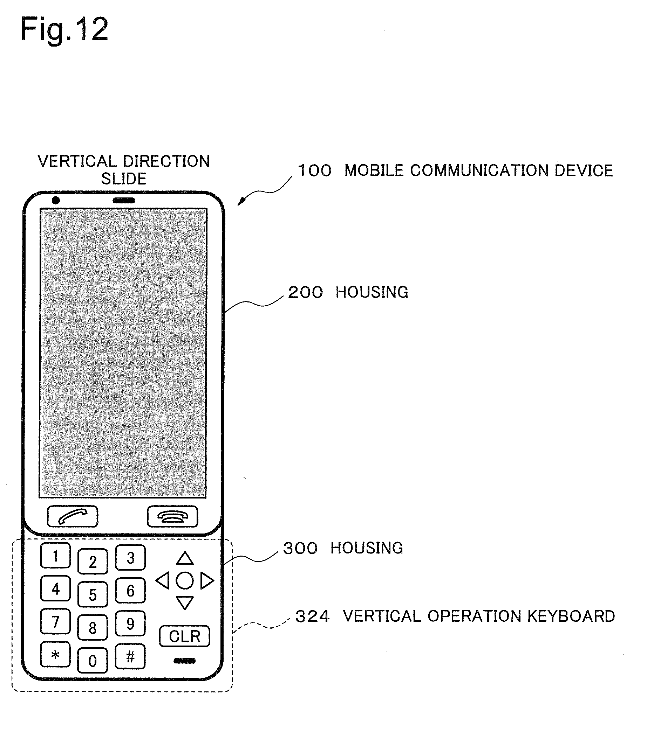

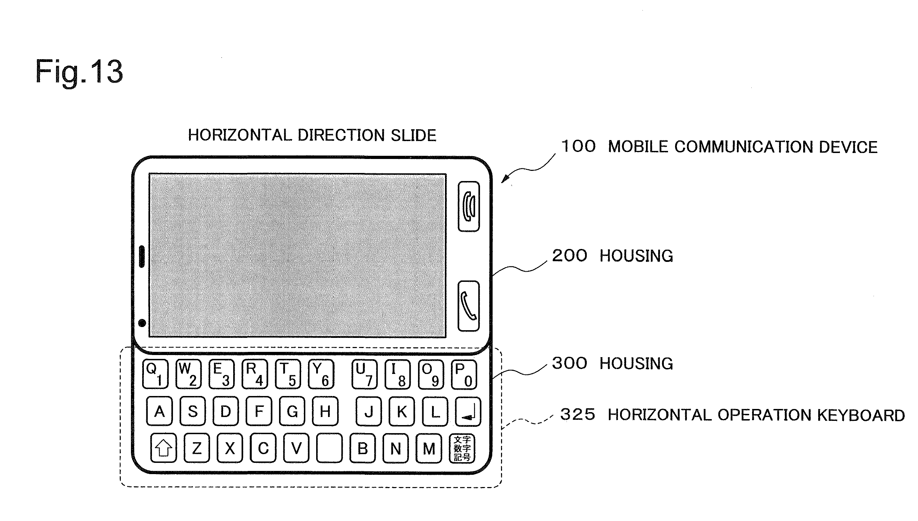

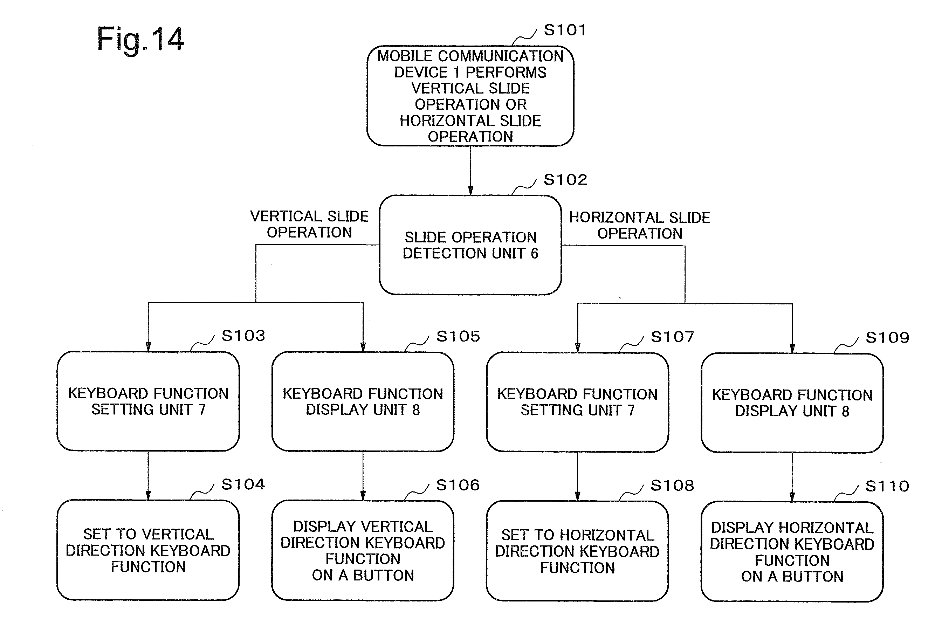

FIG. 10 is a block diagram of the mobile communication device 100. FIG. 11 shows a configuration example of a keyboard of the housing 300. FIG. 12 shows an example of sliding the housing 200 in a vertical direction. FIG. 13 shows an example of the housing 200 being slid in a horizontal direction. FIG. 14 is a flowchart showing keyboard setting process with slide operation.

FIG. 10 is a functional block diagram of the mobile communication device 100. The mobile communication device 100 includes a display unit 110, an operation unit 111, a slide operation detection unit 106, a keyboard function setting unit 107, and a keyboard function display unit 108.

The mobile communication device 100 includes two-layer structure having the housing 200 and the housing 300 (refer to FIG. 9). One of the two-layer structure is the housing 200 having a display (display unit 110), and the other is the housing 300 having a keyboard (operation unit 111). The display unit 110 displays data (e-mails, telephone numbers, image data, or the like) when the user uses the mobile communication device 100. The operation unit 111 is an input device for inputting data when the operating mobile communication device 100. As shown in FIG. 9, an upper housing 200 can be slid in the vertical direction and the horizontal direction to a lower housing 300. The mobile communication device 100 has slide system in order to perform the vertical slide operation and the horizontal slide operation.

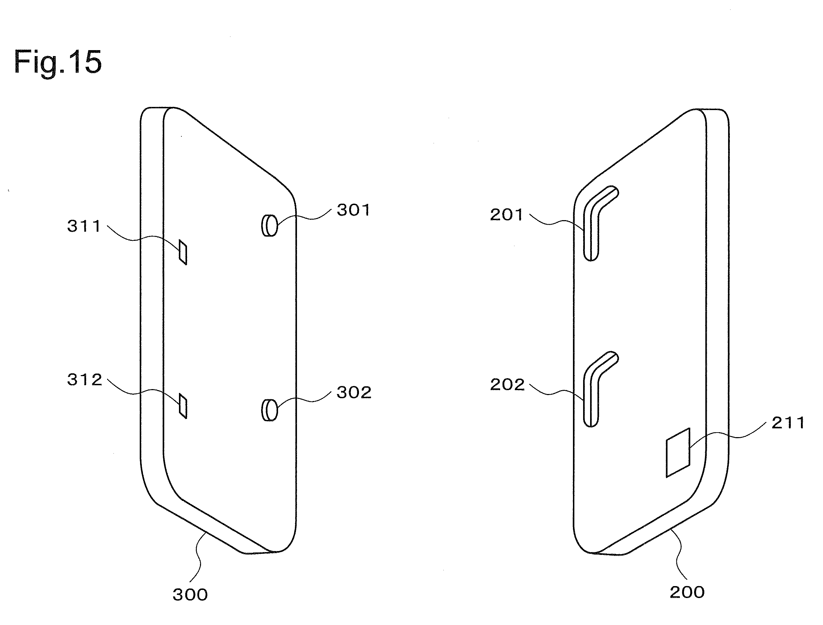

FIG. 15 shows a slide feature provided by housing 200 and housing 300 in the third exemplary embodiment. Housing 200 includes groove part 20 and groove part 202 on the surface opposite to display unit 10, and magnet 211. The groove part 201 and the groove part 202 are formed in the vertical direction and the horizontal direction of the housing 200. The magnet 211 is embedded inside of housing 200. The housing 300 includes two convex parts 301 and 302 of an approximate cylindrical shape on the surface of having operation unit 111. In addition, in FIG. 15~FIG. 19, only the part related to the slide operation of the housing 200 and the housing 300 and the detection thereof is disclosed.

The housing 300, further, includes switch 311 and switch 312 that are Hall effect switch. The output logic of the Hall effect switch is when the intensity of magnetic field penetrating the switch is above a certain level it will be "H" level, and when the intensity of magnetic field penetrating the switch is below a certain level it will be "L" level. The switch 311 and the switch 312 are embedded in the housing 300.

The mobile communication device 100 is assembled by having each of convex part 301 and convex part 302 of housing 300 and groove part 201 and groove part 202 of housing 2 set in order to be slidable.

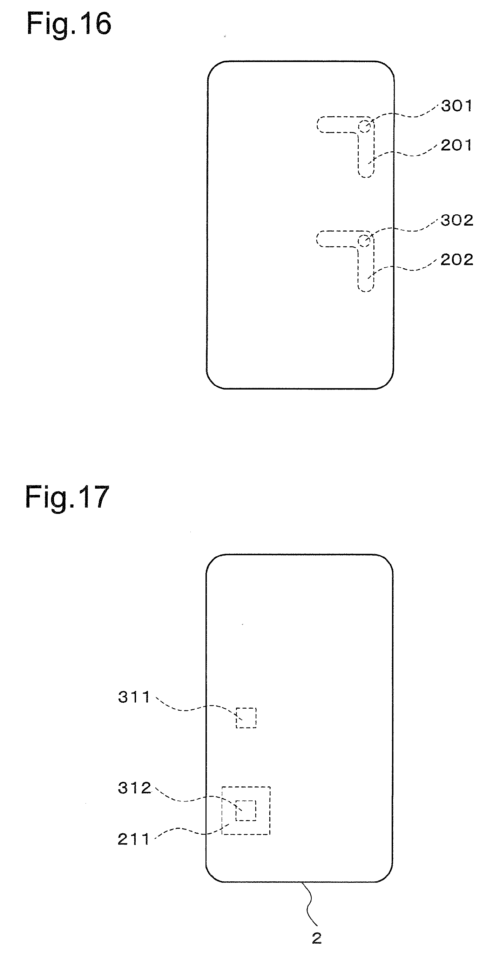

FIG. 16 is a diagram of a state of the convex part 301 and the convex part 302 of the housing 3 set to the groove part 201 and the groove part 202 of the housing 200, viewing from the side of the housing 200. In FIG. 16, the housing 300 is overlapped with the housing 200. When a user slides the housing 200 in a vertical direction, the part of the longitudinal direction in the groove part 201 and the groove part 202 of the housing 200 slides with the convex part 301 and the convex part 302. As a result, the vertical slide operation shown in FIG. 12 becomes possible. In addition, when a user slides the housing 200 in a horizontal direction, the part in the right angle to longitudinal direction of the housing 200 in approximate L shaped groove part 201 and groove part 202 slides with the convex part 301 and the convex part 302. As a result, the horizontal slide operation shown in FIG. 13 becomes possible.

Next, a detection method of the slide direction will be explained. FIG. 17 shows positional relation of the magnet 211 and the switches 311 and 312 when the housing 200 and the housing 300 are completely overlapped. In FIG. 17, the magnet 211 is on the switch 312, therefore by the magnetic field of the magnet 211 the output logic of the switch 312 is "H". However, since the switch 311 is apart from the magnet 211, the output logic of the switch 311 is "L".

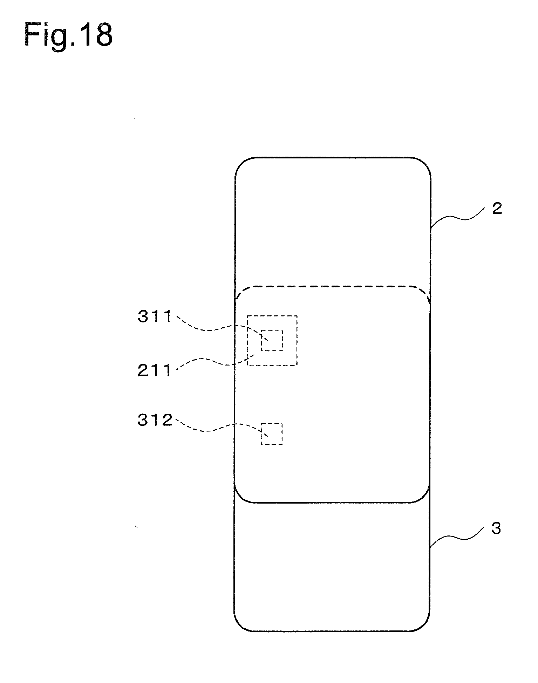

FIG. 18 shows a positional relation of the magnet 211 and the switches 311 and 312 when the housing 200 is slid in a vertical direction. In this case, since the magnet 211 is on the switch 311, by the magnetic field of the magnet 211, the output logic of the switch 311 is "H". However, the switch 312 is apart from the magnet 211, therefore the output logic of the switch 312 is "L".

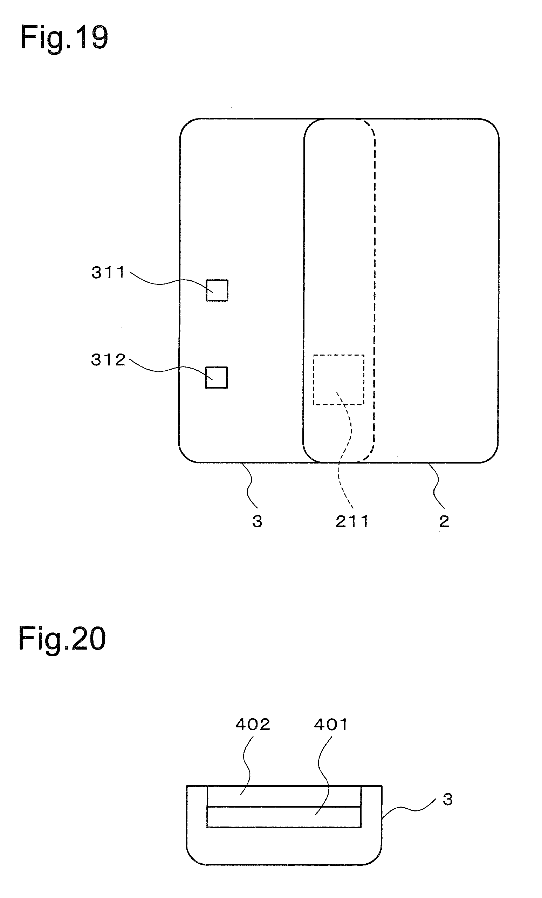

FIG. 19 shows a positional relation of the magnet 211 and the switches 311 and 312 when the housing 200 is slid in a horizontal direction. When slide operation of the housing in a horizontal direction is performed, since both the switch 311 and the switch 312 are apart from the magnet 211, the output logic of the switch 311 is "L".

The slide operation detection unit 106 detects the slide direction of the housing 200 of the mobile communication device 100 by using the above-mentioned output logic of switches 311 and 312.

The housing 300, as shown in FIG. 11, includes operation part (vertical operation keyboard 324, refer to FIG. 12) which appears when the housing 200 slides in a vertical direction towards the housing 300, and includes operation part (horizontal operation keyboard 325, refer to FIG. 13) which appears when the housing 200 slides in a horizontal direction towards the housing 300. A part of the vertical operation keyboard 324 overlaps the horizontal operation keyboard 325. In the overlapped area (hereinafter referred to as "the set part") the function display of the keyboard is switched according to the operation state. The range of the set part 309 is shown in FIG. 11.

Next, the keyboard function setting unit 107 and the keyboard function display unit 108 will be described.

The keyboard function setting unit 107 sets the position of each key, the display content, and function of the keyboard displayed to the keyboard function display unit 108, according to the detection result (the vertical direction slide or the horizontal direction slide) of the slide operation detection unit 106, and stores information hereof. The keyboard function display unit 108 displays a keyboard (operation unit) according to the content set by the keyboard function set unit 107.

FIG. 20 shows a cross-section of the operation unit 111 of the housing 300 and the keyboard function display unit 108 in the third exemplary embodiment. In FIG. 20, the touch panel sensor 402 is used as the operation unit 111. Further, the LCD (liquid crystal display) unit 401 is used as keyboard function display unit 108. As shown in FIG. 20, a transparent touch panel sensor 402 is arranged on the LCD unit 401 which housing 300 includes. The LCD unit 401 displays an outline form of the keyboard, characters, and codes. Then, when a user press a character or a code displayed on the LCD unit 401, the touch panel sensor 402 detects the pressed location. The mobile communication device 100 judges the character or the code which the user pressed by using the location detected by set information of the key stored in keyboard function set unit 107, the touch panel, and the detection result of the slide operation detection unit 106.

Here, the area of the keyboard composed by the LCD unit 401 and the touch panel sensor 402 may be the entire operation unit (that is, all keys shown in FIG. 11) of the housing 330. Or more specifically, only the set part 9 shown in FIG. 11 may be composed by the LCD unit 401 and the touch panel sensor 402, and the function of keys not included in the set part 9 may be fixed.

As seen from the above, when the mobile communication device 100 is in the vertical direction slide state, the LCD 401 displays a keyboard to keyboard function display unit 8 as shown in FIG. 12. Further, when the mobile communication device 100 is in the horizontal direction slide state, the LCD 401 displays a keyboard as shown in FIG. 5.

Next, the process of a keyboard setting with slide operation in the third exemplary embodiment of the present invention will be described using FIG. 14. FIG. 14 is a flowchart showing setting process of a keyboard function with a slide operation in the third exemplary embodiment.

First, in the mobile communication device 100, vertical direction slide operation or horizontal direction slide operation is performed by a user (step S101). The slide operation detection unit 106 detects the slide operation of housing 200, and judges whether the direction of said slide operation is vertical direction or horizontal direction (step S 102).

The slide operation detection unit 106 sends the information on judged slide operation direction to the keyboard function setting unit 107 and the keyboard function display unit 108. The keyboard function setting unit 107 and the keyboard function display unit 108 set keyboard function according to the direction of the slide operation. The keyboard function display unit 8 displays the keyboard function to a button (steps S103~S110).

By the above-mentioned operation, the third exemplary embodiment causes the following effect.

In the mobile communication device 100, the housing 200 has a structure capable of both the vertical direction slide and the horizontal direction slide towards the housing 300. Further, the keyboard display can be switched so that it is suited to the slide direction detected by the slide operation detection unit 106. For this reason, when a user performs either slide operation in the vertical direction or the horizontal direction, a user can operate the keyboard by an accustomed procedure. As a result the operation of the mobile communication device will acquire easy operability and user-friendliness for a user. For example, when using the mobile communication device in a vertical direction, the key layout of the vertical operation keyboard 324 will be the same as usual cellular phones. The display is very convenient such as when calling. Furthermore, when using the mobile communication device in a horizontal direction, the horizontal operation keyboard 325 can be made to have a layout of QWERTY keyboard which is used widely in information equipment. The display form, for example using the mobile communication device, makes the user to easily draft documents or access to the Internet.

In addition, the mobile communication device of the third exemplary embodiment sets/displays function of a button of a keyboard according to the slide direction. For this reason, one keyboard unit can be used in both situation when slide in vertical direction and in horizontal direction according to the user's status of use. By this configuration, the surface of mobile communication device can be used effectively, moreover, the cost of the device can be saved. Furthermore, the function display of a button of the keyboard is realized by displaying the set function on the button of the keyboard.

Further, the third exemplary embodiment can be applied widely as long as it is a device having a keyboard function such as wireless communication device, mobile phones, slide type cellular phones, folded type cellular phones and the like. Furthermore, in the form to which the third exemplary embodiment is applied, the function of setting/displaying the button function according to the operation status can be realized. Even when the number of buttons capable of setting the function is few, it is possible for a user to have operation of more function of the device from a key by the above-mentioned function. Moreover, by displaying a function to the button, the operability of the device also improves.

In addition, it is possible to have CPU (Central Processing Unit) execute the process shown in the flowchart of FIG. 14. Therefore, recording medium recording a program for having the process shown in the flowchart of FIG. 14 performed in CPU is also included in the present invention. As a recording medium, a semiconductor memory unit or optical and/or magnetic memory unit can be used. Further, it is possible to have a system with a different structure from the above-mentioned first exemplary embodiment to read the above-mentioned program and recording medium, and to have CPU of the system execute the above-mentioned program. The same effect of the present exemplary embodiment is obtained by also controlling communication device using such configuration.

Although the present invention has been described with reference from the first to the third exemplary embodiment, modifications and variations of the present invention is not intended to be limited to the foregoing exemplary embodiments. Numerous other modifications of the configuration or the description of the present invention can be devised by those skilled in the art that will fall within the scope of the present invention.

This application claims the priority of Japanese patent application No. 2008-084325 filed on March 27, 2008, the disclosure of which is incorporated herein in its entirety by reference.

## Claims

1. A communication device **characterized by**:
a first housing;
a second housing overlapped with the first housing as to expose at least one of predetermined areas on the surface with an operation unit;
a slide operation detection means which detects which of the predetermined areas is or are exposed;
a function setting means which receives the detection result and sets the functions of the operation unit according to the exposed area or areas; and
a function display means which displays the set function on the operation unit.

2. The communication device of claim 1, **characterized in that:**
the operation unit is a keyboard; and
the function display means performs display of the set function on each key button of the keyboard.

3. The communication device of claim 2, **characterized in that:**
the key button as an object of the display is a key button in the overlapped area of the part operable when slid in the first direction and the part operable when slid in the second direction, among the key buttons of the keyboard provided in the second housing.

4. A method for displaying function of communication device including a first housing and a second housing overlapped with the first housing as to expose at least one of predetermined areas on the surface with an operation unit, **characterized by**:
detecting which of the predetermined areas is or are exposed;
receiving the detection result and setting a function of the operation unit according to the exposed area or areas; and
displaying the set function to the operation unit.

5. The method for displaying function of communication device of claim 4, **characterized in that:**
the operation unit is a keyboard; and
the function display means performs display of the set function on each key of the keyboard.

6. The method for displaying function of communication device of claim 4, **characterized in that:**
the key button as an object of the display is a key button in the overlapped area of the part operable when slid in the first direction and the part operable when slid in the second direction, among the key buttons of the keyboard provided in the second housing.

7. A machine-readable recording medium recording the displaying function program for communication device including a first housing and a second housing overlapped with the first housing as to expose at least one of predetermined areas on the surface with an operation unit,
the displaying function program for the communication device having the computer perform :
the process of detecting which of the predetermined areas is or are exposed;
the process of receiving the detection result and setting the functions of the operation unit according to the exposed area or areas; and
the process of displaying the set function on the operation unit.
